Europäisches Patentamt

European Patent Office

Office européen des brevets

(19)

(11) **EP 0 697 638 B1**

(12) **FASCICULE DE BREVET EUROPEEN**

(45) Date de publication et mention
de la délivrance du brevet:
**08.03.2000 Bulletin 2000/10**

(51) Int Cl.$^7$: **G05B 19/042**

(21) Numéro de dépôt: **95401723.2**

(22) Date de dépôt: **19.07.1995**

(54) **Procédé de détection des séquences complètes et des séquences d'échec dans un système de reconnaissance de situations**

Verfahren zur Aufspürung von vollständigen Sequenzen und Misserfolgsequenzen in einem Fallerkennungssystem

Method of detection of complete sequences and failed sequences in a system for situation recognition

(84) Etats contractants désignés:
**DE ES FR GB IT**

(30) Priorité: **29.07.1994 FR 9409425**

(43) Date de publication de la demande:
**21.02.1996 Bulletin 1996/08**

(73) Titulaire: **BULL S.A.**
**78430 Louveciennes (FR)**

(72) Inventeurs:
• **Ferenczi, Marc**
**75019 Paris (FR)**
• **Pares, Pascal**
**92150 Suresnes (FR)**
• **Grossetete, Christine**
**75015 Paris (FR)**

(74) Mandataire: **Debay, Yves**
**Cabinet Yves Debay,**
**122 Elysée 2**
**78170 La Celle Saint Cloud (FR)**

(56) Documents cités:
• **IJCAI-93. PROCEEDINGS OF THE THIRTEENTH INTERNATIONAL JOINT CONFERENCE ON ARTIFICIAL INTELLIGENCE, PROCEEDINGS OF INTERNATIONAL JOINT CONFERENCE ON ARTIFICIAL INTELLIGENCE, CHAMBERY, FRANCE, 28 AUG.-3 SEPT. 1993, 1993, SAN MATEO, CA, USA, MORGAN KAUFMANN PUBLISHERS, USA, pages 166-172, DOUSSON C. ET AL 'Situation recognition: representation and algorithms'**
• **AAAI-92. PROCEEDINGS TENTH NATIONAL CONFERENCE ON ARTIFICIAL INTELLIGENCE, SAN JOSE, CA, USA, 12-16 JULY 1992, 1992, MENLO PARK, CA, USA, AAAI PRESS, USA, pages 735-740, DORN J. 'Temporal reasoning in sequence graphs'**
• **AUTOMATION AND REMOTE CONTROL DVOENKO S. D.: 'Recognition of a sequence of events on a finite time interval' vol. 52, no. 5, AURCAT ISSN 0005-1179, pages 711 - 718**
• **PROCEEDINGS OF THE 5TH JERUSALEM CONFERENCE ON INFORMATION TECHNOLOGY (JCIT). NEXT DECADE IN INFORMATION TECHNOLOGY (CAT. NO.90TH0326-9), JERUSALEM, ISRAEL, 22-25 OCT. 1990, ISBN 0-8186-2078-1, 1990, LOS ALAMITOS, CA, USA, IEEE COMPUT. SOC, USA, pages 774-780, BELFER A. ET AL 'A combinatorial approach to temporal reasoning'**

## Description

La présente invention concerne un procédé de détection des Séquences d'Echec dans un Système de Reconnaissance de Situations. L'objectif d'un tel système est de raisonner sur le temps, la programmation par situation permettant de surveiller et de contrôler l'évolution dans le temps d'un ensemble de faits d'une base de connaissances.

Les outils industriels actuels conçus pour raisonner en temps réel de façon continue sur un procédé sont mal adaptés aux cas dans lesquels il est nécessaire d'identifier des événements significatifs dans le déroulement du procédé observé, de prendre en compte les relations temporelles entre ces événements et d'inférer sur celles-ci.

Pour certains de ces outils, les événements survenus sont analysés par rapport au passé, entraînant une historisation obligatoire d'une importante quantité d'information. Si ce traitement atemporel suffit dans certains cas, il est insuffisant dès qu'il s'agit de reconnaître en temps réel des séquences d'événements et de savoir si elles satisfont ou non des contraintes temporelles.

D'autres systèmes permettent la détection des événements par des suites de tests répétés constamment au cours du temps. Le point faible de cette approche est que ces tests ont lieu indéfiniment après que les délais, fixés par les contraintes temporelles, sont dépassés. Ceci réduit immanquablement l'efficacité globale de tels systèmes.

Le but de la présente invention est de remédier aux inconvénients de l'historisation et de l'encombrement mémoire des systèmes connus en permettant la détection au plus tôt des Séquences Complètes et surtout des Séquences d'Echec, c'est à dire des séquences d'événements qui satisfont totalement une Situation donnée et celles dont on sait qu'aucun événement ne pourra les satisfaire. Une fois ces séquences détectées, les actions nécessaires s'ensuivent automatiquement et elles peuvent être détruites, libérant ainsi l'espace mémoire occupé et déchargeant le système de traitement.

Ce but est atteint par le fait que le procédé de détection des séquences d'échec dans un système de reconnaissance de situations comportant au moins une situation, composée d'une liste d'événements et de contraintes temporelles liant ces événements, pour laquelle est créée en mémoire une séquence d'événements contenant une liste des événements attendus dans cette situation et des intervalles des dates d'occurrence possibles de chacun de ces événements, lesdits intervalles étant initialement égaux à ]-∞, +∞[, ledit procédé, qui gère une horloge interne, différente du temps universel, représentant la date courante du système est caractérisé par la mise à jour des séquences d'événements pour chaque situation à chaque occurrence d'un nouvel événement, cette mise à jour provoquant une première étape de mise à jour de la date courante à la date à laquelle le nouvel événement s'est produit, une seconde étape de mise à jour, pour chaque séquence d'événements mémorisée, des intervalles des dates d'occurrences possibles des événements non encore enregistrés en fonction des contraintes temporelles et de la nouvelle date courante, une troisième étape de détection de toutes les séquences d'événements pour lesquelles un de ces intervalles est vide, ces séquences étant désignées comme séquences d'échec; une quatrième étape de création de nouvelles séquences d'événements intégrant ce nouvel événement et une cinquième étape de détection des séquences complètes.

Un autre avantage est atteint dans une réalisation du procédé selon l'invention telle que la mémoire occupée par une séquence d'événements est libérée si celle-ci est détectée comme étant une Séquence d'Echec. De la même façon, dans une variante possible, la mémoire occupée par une séquence d'événements est libérée si celle-ci est détectée comme étant une Séquence Complète.

Selon une autre particularité du procédé selon l'invention, la création d'une nouvelle séquence d'événements, qui correspond à la reconnaissance d'un événement attendu, provoque l'appel d'une fonction dite de Reconnaissance, associée à la situation correspondant à cette séquence d'événements. De la même manière, la détection d'une séquence complète ou la détection d'une Séquence d'Echec provoque l'appel d'une fonction dite Complète ou, respectivement, d'une fonction dite d'Echec, ces fonctions étant associées à la situation correspondant à cette séquence d'événements. Ceci a pour avantage de permettre au système de conduite de procédé d'initier d'autres actions en fonction des événements enregistrés et de l'évolution des situations. Par exemple, il est ainsi possible de signaler à l'opérateur le bon déroulement d'un scénario ou d'envoyer des signaux d'alarmes justifiés.

Selon le procédé de l'invention, la fonction dite d'Echec n'est appelée que si la séquence d'échec détectée n'est inclue dans aucune autre séquence d'événement. De cette manière, le nombre de fausses alarmes signalées peut être réduit.

Afin de permettre la gestion d'événements dont on sait que l'enregistrement peut être retardé, une valeur positive de délai peut être définie pour chaque événement composant une situation, ledit délai exprimant sous forme de durée un retard possible du signalement de l'occurrence de cet événement.

Selon encore une variante du procédé selon l'invention, une sixième étape de calcul de la date de temps mort, date la plus proche à laquelle au moins une séquence d'événements aura échoué si un événement qu'elle attend ne se produit pas avant cette date, est ajoutée entre la troisième et la quatrième étape du procédé. Cette date de temps mort est calculée comme étant le minimum des bornes supérieures des intervalles des dates d'occurrence possibles des événements attendus par chacune des séquences d'événements.

Selon une particularité de cette variante, à chaque occurrence d'un nouvel événement, et tant que la date d'occurrence du nouvel élément est postérieure à la date de temps mort, la première étape est remplacée par une étape de mise à jour de la date courante à la date de temps mort et les deuxième, troisième et sixième étapes sont effectuées;

Selon encore une autre variante du procédé selon l'invention, la définition des situations est accompagnée de la génération d'un graphe temporel pour chacune des situations, ce graphe permettant la visualisation sur un écran des événements et des contraintes temporelles les liant à l'aide d'objets graphiques et d'arcs, respectivement représentatifs des événements et des contraintes, et portant comme attributs respectifs les noms donnés aux événements qu'ils représentent et les intervalles de contraintes temporelles, et la vérification de la consistance des chemins formés par les contraintes temporelles entre les différents événements attendus.

D'autres particularités et avantages de la présente invention apparaîtront plus clairement à la lecture de la description ci-après, faite en référence aux dessins annexés dans lesquels :

la figure 1a représente un exemple de graphe temporel de Situation,

la figure 1b représente un exemple de définition d'une situation dans le langage KOOL,

la figure 2 représente un exemple d'une suite d'occurrences d'événements, et des séquences d'événements correspondantes, et

les figures 3a à 3c représentent sous forme d'organigrammes les algorithmes de propagation régissant le procédé.

L'effort de modélisation théorique des processus physiques, des réactions chimiques, ou de d'autres phénomènes accompagnant la plupart des procédés de fabrication a rarement conduit à un modèle suffisamment complet et précis pour décider de la conduite entièrement automatique de procédé. Par exemple, les phénomènes de toutes sortes qui se produisent dans un haut-fourneau sont trop complexes et variés pour permettre la conduite du procédé métallurgique.

Certains modèles, comme le MMHF (Modèle Mathématique du Haut-Fourneau) ont été développés, mais ils restent partiels, et dès que des perturbations apparaissent, ce qui se produit en particulier en cas de mauvais fonctionnement, les déséquilibres provoqués invalident souvent les calculs théoriques. La conduite de procédé relève de ce fait d'une compétence accumulée par les gens de métier au cours de leurs années d'expérience.

L'analyse récente des experts vise à rassembler des données sous forme d'une physique "naïve" dans le sens où elle aboutit non pas à des équations, mais à des ensembles de règles plus générales et plus abstraites, plus génériques. La clé d'un système temps réel de conduite de procédé réside dans la capacité à raisonner dans le temps sur les signaux mesurés sur le lieu d'exécution du procédé, de détecter au plus tôt les phénomènes, de savoir analyser leurs relations spatiales et temporelles et de suivre leur évolution.

Le concept de programmation par "Situation", introduit par M. Ghallab et al, "Managing Efficiently Temporal Relations through Indexed Spanning Trees", Proceedings 11ème IJCAI, Detroit 1989, pages 1297 à 1303, constitue une solution programmatique au problème de l'expression de la logique de raisonnement temporel en ligne. Ce type de programmation se base sur quelques concepts fondamentaux comme les "Situations" et les "séquences d'événements" qui vont être décrits plus loin. La performance des algorithmes qui découlent de ce concept dépend fortement du nombre de séquences gérées simultanément et il est à noter que la détection au plus tôt des Séquences d'Echec permet par conséquent de réduire le nombre de déquences concurrentes.

Une "Situation" est définie sous forme d'un scénario qui met en relation un ensemble d'événements ponctuels et de contraintes temporelles. Il est entendu qu'un événement n'a pas de durée, qu'il est instantané. A chaque occurrence d'un événement, on associe une date, appelée date d'occurrence de l'événement.

Les contraintes temporelles expriment la relation "avant" entre deux événements. Elle peut être quantifiée par un intervalle temporel qui représente le délai minimal et le délai maximal entre les dates d'occurrence des deux événements.

Une Situation peut être aisément représentée par un graphe temporel. Celui-ci permet de visualiser de façon claire les relations entre les suites d'événements attendus dans le cadre d'une Situation. Un tel graphe est décrit par un ensemble de noeuds et d'arcs avec les conventions suivantes :

- à chaque noeud est associé un événement;

- un arc représente la relation temporelle qui relie deux noeuds;

- un ensemble d'arcs sortant d'un noeud "A" exprime une conjonction d'événements attendus après l'occurrence d'un événement de type "A";

- un ensemble d'arcs entrant sur un noeud "B" exprime une conjonction d'événements précédant l'occurrence d'un événement "B".

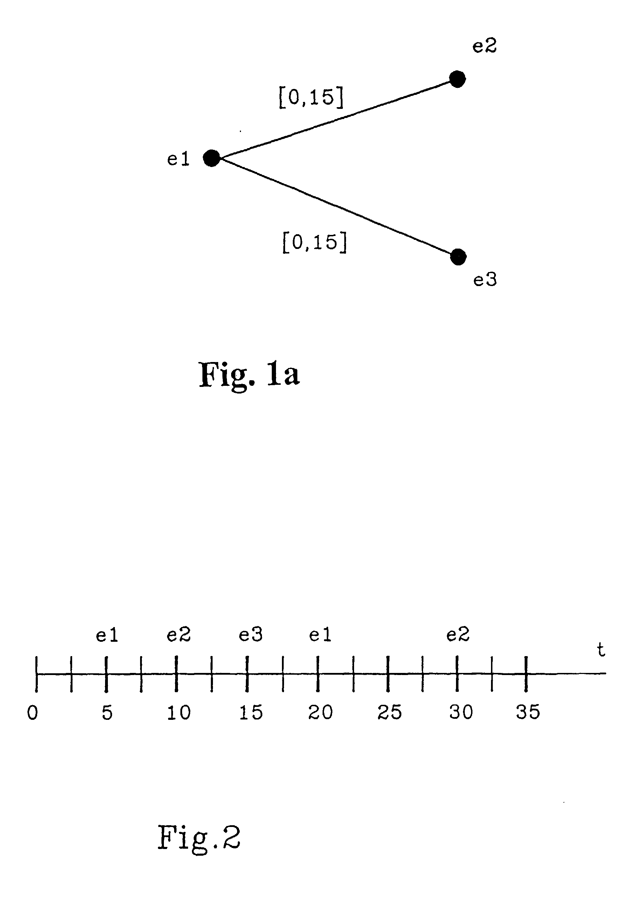

La figure 1a représente un tel graphe temporel, illustrant la Situation décrite par la règle suivante, tirée d'une application possible à la conduite de haut-fourneaux :

"S'il y a une augmentation de la température de Margelle sur le rang R et la génératrice G, attendre alors entre 0 et 15 minutes une augmentation de la température Stave et une augmentation de la température d'un Réfractaire sur le même rang et la même génératrice."

Le noeud 11 est la représentation du premier phénomène, appelé par la suite l'événement e1, qui débute cette Situation. Il s'agit ici de la hausse de température d'une Margelle sur le rang R et la génératrice G. Les noeuds 12 et 13, représentatifs des événements e2 et e3 attendus dans le cadre de cette Situation, représentent respectivement les hausses de température du Stave et d'un Réfractaire sur le même rang et la même génératrice. Ces noeuds sont reliés par les arcs 15 et 16 exprimant les contraintes temporelles reliants ces événements. Les intervalles délai minimal, délai maximal définis par la règle ci-dessus sont reportés sous forme de label en regard de ces arcs.

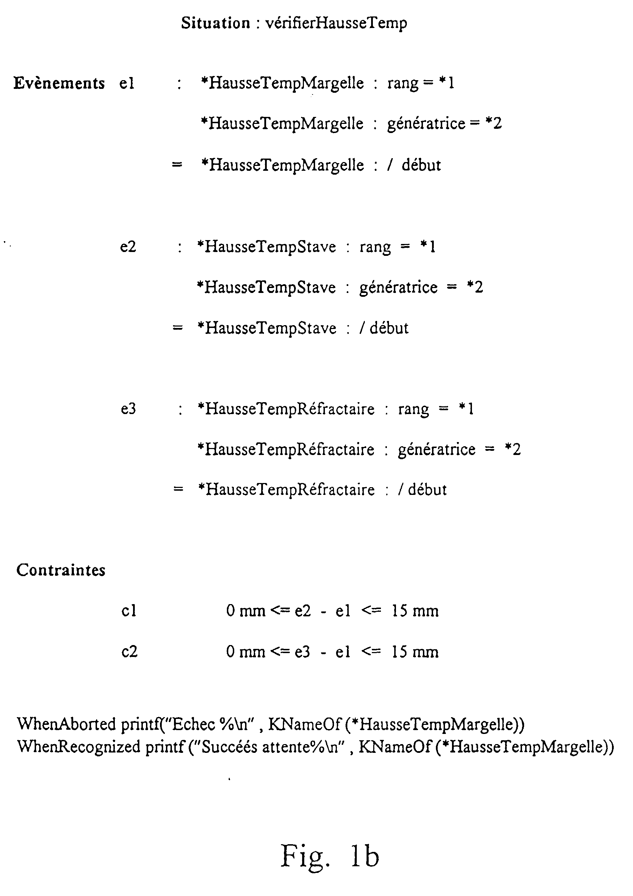

La figure 1b est un exemple de définition de cette situation dans une version étendue du langage de représentation des connaissances KOOL. Cette situation est nommée 'verifierHausseTemp' et est composée de trois événements e1, e2 et e3, respectivement du type HausseTempMargelle, HausseTempStave et HausseTempRefractaire, de deux contraintes c1 et c2 et de deux fonctions, WhenRecognized et WhenAborted, appelées respectivement lors de la reconnaissance d'une Séquence Complète ou d'une Séquence d'Echec.

Une "séquence d'événements" est la représentation en mémoire, sous la forme d'une structure de données, d'une suite d'occurrences d'événements qui satisfait totalement ou partiellement une Situation. Elle doit respecter les contraintes temporelles et l'ordonnancement des événements définis par une Situation. On distingue deux types particuliers de séquences d'événements : les Séquences Complètes et les Séquences d'Echec.

Une séquence est dite Séquence Complète lorsqu'elle satisfait totalement la Situation, c'est à dire lorsque tous les événements prévus dans la description d'une Situation sont survenus, et ce dans les délais imposés par les contraintes temporelles associées à ces événements.

Une séquence qui ne satisfait pas totalement la Situation est dite Séquence Partielle. On introduit aussi la notion de Séquence Maximale lorsqu'une séquence est telle qu'aucune autre ne la contient.

Une séquence à la fois Partielle et Maximale est alors dite Séquence d'Echec lorsque aucune occurrence d'événement ne peut la compléter pour satisfaire totalement la Situation. Imposer à une séquence d'être Maximale pour être une Séquence d'Echec a pour effet bénéfique de réduire le nombre de fausses alarmes, puisque seule la séquence contenant le plus grand nombre d'information concernant une Situation donnée déclenchera une action, par exemple un signal sur un pupitre de contrôle, et non pas chacune de celles qu'elle inclut.

Prenant l'exemple de la figure 1a, en supposant que l'événement e1 se produise à la date t, une séquence d'événements correspondant à la Situation décrite ne sera complète que si un événement e2 et un événement e3 surviennent dans l'intervalle [t, t+15]. Si un de ces deux événements e2 ou e3 ne s'est pas encore produit à la date t+15 passée, la séquence sera reconnue comme une Séquence d'Echec.

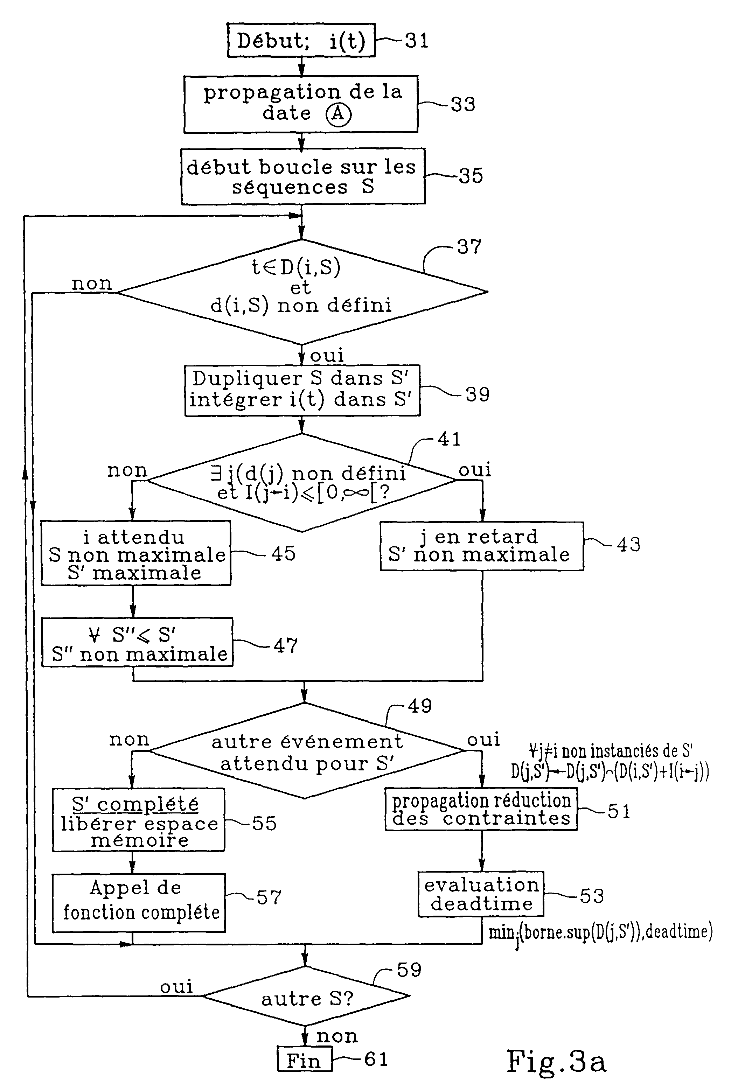

La figure 2 représente une suite d'occurrences d'événements enregistrée au cours du temps et reportée sur un graphe à la date t=40. Conformément à la situation précédemment décrite, une Séquence Complète $S_c$ {(e1, 5); (e2, 10); (e3, 15)} et une Séquence d'Echec $S_e$ {(e1, 20); (e2, 30)} sont détectées, respectivement à t=15 et t=35 passée. En effet, à la date t=15, l'événement e3 vient compléter la séquence $S_c$, commencée à la date t=5 par l'occurrence de e1 et à la date t=10 par l'occurrence de e2. Au contraire, la séquence initiée à la date t=20 par l'occurrence de e1 n'a pas vu survenir les événements e2 et e3 avant la date t=35. La contrainte temporelle [0, 15] étant brisée à la date t=20+15=35 passée, cette séquence est alors déclarée Séquence d'Echec.

Un procédé de raisonnement temporel doit être capable de mesurer le temps. Le système de reconnaissance de situations intègre une horloge interne qui évolue indépendamment du temps universel. Cette horloge évolue en effet en fonction des informations temporelles enregistrées dans la base de connaissances, lors de l'occurrence de nouveaux événements. On définit la date courante comme la date la plus récemment enregistrée.

Cette évolution du temps interne, distinct du temps universel, a pour conséquence qu'il est possible de générer des occurrences d'événement simultanées, et que le système de reconnaissance de situations peut fonctionner soit avec un temps simulé, soit en différé par rapport aux événements réels. Par exemple, la date courante sera incrémentée de 10 minutes, non pas après que 10 minutes se sont réellement écoulées, mais lorsque la fonction de mise à jour de l'horloge interne aura provoqué cet incrément ce qui peut se produire quelques secondes ou quelques heures plus tard selon les informations datées enregistrées.

Une fois une date enregistrée, le procédé infère les conséquences de cette évolution du temps pour les séquences mémorisées et détecte celle qui ont alors échoué. Dans un tel procédé, il n'est donc pas possible de "remonter le temps". Afin de permettre la gestion d'événements non chronologiques, par exemple parce que l'acheminement des signaux correspondants à un événement donné ou parce que le traitement de ces signaux a été long, l'introduction de la notion de Délai est nécessaire.

Un Délai associé à un événement doit être introduit lors de la définition de la Situation correspondante. C'est une valeur positive qui représente une durée, un retard tolérable dans l'enregistrement de l'occurrence d'un événement pour vérifier les contraintes temporelles associées à cet événement. Si on suppose la définition d'un délai de 10 minutes comme retard autorisé de l'occurrence de l'événement e2 dans l'exemple de la figure 1, le système attendra l'occurrence de e2 jusqu'à 25 minutes après l'occurrence de e1 pour déclarer la séquence Séquence d'Echec (à condition cependant que e3 soit survenu dans les 15 minutes après l'occurrence de e1).

Le procédé de l'invention est décrit par les algorithmes de propagation des figures 3a à 3c. Ceux-ci font intervenir un certain nombre de symboles avec les conventions typographiques suivantes :

- N désigne le nombre de noeuds (représentation d'événements) du graphe temporel,

- ces noeuds sont numérotés de 1 à N, et désignés par leur numéro,

- I(i→j) désigne, sous forme d'un intervalle, la contrainte temporelle entre deux noeuds i et j,

- $\Delta(i)$ désigne l'intervalle $[0, \Delta(i)]$ avec $\Delta(i)$ le délai associé à i

- d(i, S) désigne la date d'occurrence de i, enregistrée dans la séquence S; i est instancié dans S si d(i, S) existe,

- D(i, S) désigne, sous forme d'un intervalle, les dates d'occurrence possibles de i pour la séquence S, et

- pour I et J deux intervalles temporels, on a

$$I = [ I-, I+ ]$$

$$-I = [ -I+, -I- ]$$

$$I = \varnothing \text{ si et seulement si } I- > I+$$

$$I + J = [ I- + J- , I+ + J+ ]$$

$$I \cap J = [ \max(I-, J-) , \min(I+, J+) ]$$

Lorsque l'on fait un saut dans le temps, par exemple à l'enregistrement d'un nouvel événement, afin de détecter les Séquences d'Echec dans l'ordre chronologique dans lequel elles ont échoué, on définit une variable globale appelée <u>deadtime</u>, qui représente la plus petite date strictement supérieure à la date courante à laquelle une séquence peut échouer. Cette variable est initialisée à la valeur +∞. Son calcul permet dans une boucle de réaliser de petits sauts temporels successifs de la date courante jusqu'à la nouvelle date en passant par les dates intermédiaires auxquelles des séquences ont pu échouer.

Le procédé se base sur deux modes de propagation des nouvelles informations enregistrées dans la base de connaissances : tout d'abord, la propagation d'un événement, qui permet de mettre à jour les séquences d'événements partielles et d'identifier les Séquences Complètes; ensuite, la propagation de la date courante, qui permet d'identifier les Séquences d'Echec.

Lors de l'occurrence d'un événement, les séquences en attente de cet événement sont dupliquées. Les duplicatas intègrent le nouvel événement et se mettent en attente des événements suivants définis dans la description de la Situation à laquelle elles sont associées. Les séquences originelles restent en attente d'une autre occurrence de cet événement, jusqu'à ce qu'elles échouent.

Il existe au départ une séquence vide initiale M, pour laquelle :

$$\forall\ i \in [1, N]\ ,\ D(i, M) = ]-\infty, +\infty[$$

A chaque occurrence d'un événement i dont la date d'occurrence est t, le procédé débute à l'étape 31 de la figure 3a. L'étape 33 permet la propagation de la date courante à la date d'occurrence t de l'événement i et la détection des séquences d'échec. La procédure suivie en sera décrite un peu plus loin.

L'étape 35 marque le début d'une boucle de scrutation de toutes les Séquences Partielles. A l'étape 37, on détecte si la Séquence Partielle courante S est concernée par l'événement survenu i. Pour ce faire, on vérifie si i est un événement attendu de S, si la date d'occurrence de l'événement i appartient à l'intervalle des dates d'occurrence possibles D(i, S) défini par les contraintes temporelles, et qu'aucune occurrence de cet événement n'est déjà enregistrée à cette même date t (ce qui équivaut à vérifier que d(i, S) n'est pas encore instanciée). Si ce test se révèle négatif, on passe à l'étape 59, qui termine la boucle de scrutation.

Au contraire, si l'événement i satisfait les conditions du test, le procédé se poursuit à l'étape 39 où la Séquence Partielle courante S est dupliquée en mémoire. L'occurrence de l'événement i est alors intégrée à la copie de S, S', en instanciant d(i, S') à la valeur t et en réduisant l'intervalle D(i, S') à [t, t].

Il est ensuite nécessaire à l'étape 41 de déterminer s'il existe un événement j dont l'occurrence était attendue avant celle de l'événement i, selon la Situation associée à S et S', et qui n'a pas encore été enregistré. Ceci s'exprime par un test sur l'existence d'un noeud j tel que la contrainte temporelle liant j à i est incluse dans un intervalle [0, +∞]. Cette étape conduit alors à la détermination des séquences maximales et non maximales. En effet, s'il est positif, cela signifie que l'on a autorisé un retard (délai) sur un tel événement j, et donc que la séquence S' n'est pas maximale. Un indicateur booléen pouvant prendre les valeurs "vrai" ou "faux", enregistré avec les informations composant la séquence est alors placé à "faux" à l'étape 43 pour exprimer ce fait. Dans le cas où un tel j n'existe pas, cela signifie bien que, selon l'ordre prévu dans la définition de la situation, l'événement i était attendu, et donc que la séquence S' est maximale, au détriment de S qui ne peut donc plus l'être. Ceci s'illustre par le positionnement de l'indicateur booléen à "vrai" pour S' et "faux" pour S, comme indiqué à l'étape 45. Cet indicateur est de même positionné à "faux pour toutes les autres séquences S" incluses dans S' à l'étape 47.

L'étape suivante dans les deux cas est l'étape 49, qui vise à déterminer si d'autres événements sont attendus pour compléter S'. Si c'est le cas, les contraintes temporelles liées à ces événements attendus sont réduites à l'étape 51 : pour chacun des noeuds j non encore instanciés de S', l'intervalle D(j, S') est réduit à l'intersection de l'intervalle D(j, S') courant et de l'intervalle déterminé en effectuant la somme D(i, S')+I(i→j). L'intervalle D(i, S') ayant été initialisé à [t, t] à l'étape 39, cette somme revient à propager la contrainte temporelle I(i→j) liant i à j à compter de la date d'occurrence t de l'événement i.

L'étape suivante 53, permet de remettre à jour la variable globale deadtime, utilisée dans la méthode de propagation de la date courante. La date la plus proche à laquelle une séquence peut échouer correspond au minimum des bornes supérieures des intervalles d'occurrence possibles de tous les événements encore attendus.

Une fois cette valeur recalculée, on retrouve l'étape 59 de fin de la boucle débutée à l'étape 35. S'il existe d'autres séquences partielles S non traitées, on reboucle sur l'étape 37 avec la séquence partielle suivante.

Si à l'étape 49, on constate qu'aucun autre événement n'est attendu pour la séquence S', il s'agit là d'une Séquence Complète et comme décrit aux étapes 55 et 57, on peut libérer l'espace mémoire occupée par la séquence S' et appeler la fonction WhenRecognized de la situation associée. Cette fonction peut alors engager d'autres actions relatives au procédé conduit, ou simplement faire afficher un message sur un terminal pour un opérateur.

Arrivé à l'étape 59, on reboucle sur l'étape 37 dans le cas où il reste des séquences partielles à traiter, ou bien on termine jusqu'à la prochaine occurrence d'un événement.

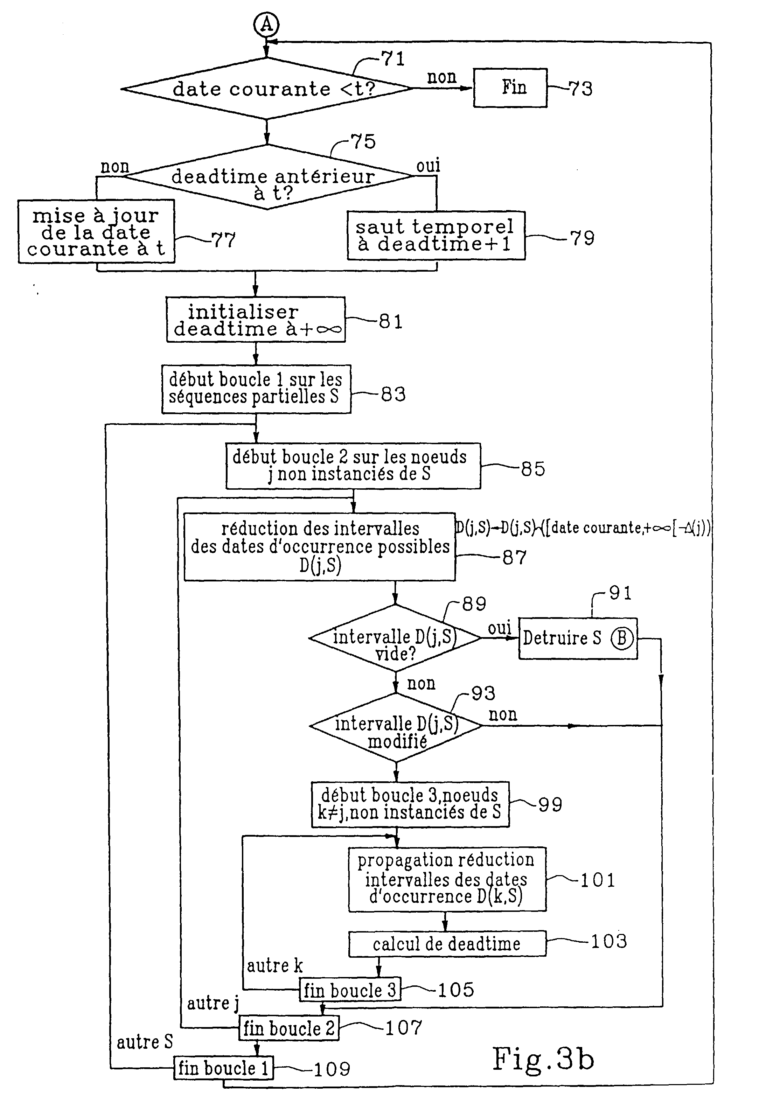

L'étape 33 de propagation de la date courante, qui est réalisée par une fonction qui permet la mise à jour de l'horloge interne à une date transmise et conduit à la détection des Séquences d'Echec, va maintenant être décrite en détail en référence à la figure 3b. Elle débute par l'étape 71 à laquelle on vérifie que la date transmise t est bien postérieure à la date courante interne. Si ce n'est pas le cas, la fonction se termine, provoquant le retour à l'étape 35.

Dans le cas contraire, une mise à jour est nécessaire, et on teste tout d'abord à l'étape 75 si la date la plus proche à laquelle une séquence peut échouer (représentée par la variable deadtime) est antérieure à cette date t. Si tel est le cas, on passe à l'étape 79, où on provoque un saut temporel de la date courante à la date deadtime + 1, la première date discrète après deadtime. Sinon, on met à jour la date courante à la date t à l'étape 77. Ce principe permet par rebouclage de mettre à jour la date courante à la date t en étant sûr de détecter d'éventuelles Séquences d'Echec qui auraient échoué à des dates intermédiaires, selon l'ordre chronologique.

Quel que soit la progression temporelle, en sauts successifs ou directement vers la date t, l'étape suivante 81 permet de réinitialiser la variable globale deadtime à +∞. Ensuite, on entame une première boucle sur toutes les séquences partielles S à l'étape 83. A l'étape 85, on entame une seconde boucle sur les noeuds non instanciés j de chaque séquence partielle S. On procède alors à l'étape 87 à la réduction des intervalles des dates d'occurrence possibles de ces noeuds j, D(j, S), par intersection de l'intervalle courant pour ce noeud et d'un intervalle défini par [date courante, +∞[ auquel on retire le délai défini pour ce noeud Δ (j). Cette opération consiste à réduire l'intervalle D(j, S) par sa borne inférieure, en tenant compte du délai autorisé.

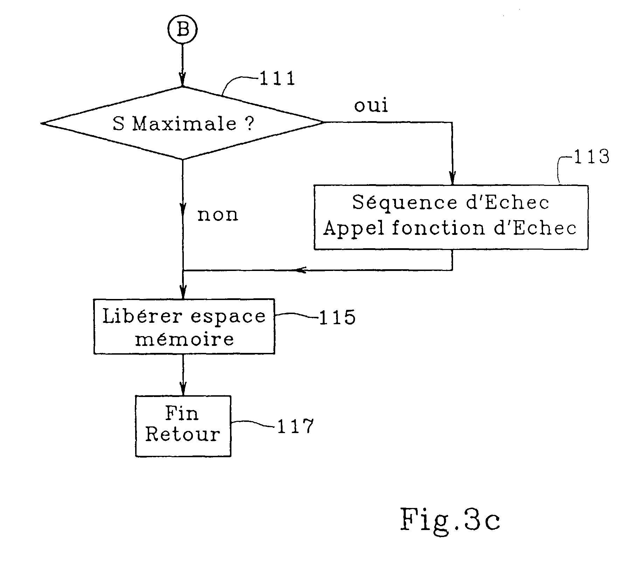

L'étape 89 détermine alors si cet intervalle D(j, S) est vide. Dans l'affirmative, il s'agit d'une séquence pour laquelle la contrainte sur le noeud j est brisée, et celle-ci peut être détruite à l'étape 91. Le détail de cette étape est représenté à la figure 3c. L'étape 111 permet, à l'aide d'un test sur la valeur de l'indicateur booléen, de vérifier si la séquence S courante est Maximale auquel cas il s'agit d'une Séquence d'Echec. La fonction WhenAborted, si elle existe est alors appelée. Dans tous les cas, cette séquence S est devenue inutile et on peut libérer l'espace mémoire qu'elle occupait. Il est à noter que les Séquences Partielles incluses dans une Séquence d'Echec, donc non Maximales, seront toutes détectées et automatiquement détruites, sans provoquer de fausses alarmes. Une fois cette séquence S détruite, la méthode de propagation se poursuit en 107.

Dans l'alternative inverse, l'intervalle D(j ,S) n'est pas vide mais on teste à l'étape 93 s'il a cependant été modifié par l'étape 87 de réduction. Sinon, on saute à l'étape 107. Si au contraire la réduction l'a affecté, on propage cette réduction aux autres noeuds non instanciés k de S. Pour cela, on entame une boucle sur ces noeuds k à l'étape 99, boucle qui comprend deux étapes : une première, 101, consistant à propager la réduction de l'intervalle D(j, S) aux intervalles des dates d'occurrence possibles des noeuds k à l'aide des contraintes temporelles I(j→k) :

$$D(k, S) \leftarrow D(k, S) \cap ( D(j, S) + I(j \rightarrow k) ),$$

et une seconde, 103, effectuant le calcul de la date la plus proche postérieure à la date courante à laquelle une Séquence Partielle peut échouer. Cette date d'échec possible correspond à la plus petite des bornes supérieures des intervalles de dates d'occurrence possibles pour tous les noeuds k, d'où l'expression :

$$\text{deadtime} \leftarrow \min( \text{borne\_sup}(D(k, S)), \underline{\text{deadtime}} ).$$

Le résultat de ce calcul permet de s'assurer que l'échéance possible d'une Séquence d'Echec entre la date courante et la date t sera vérifiée, à l'aide d'un saut temporel conforme aux étapes 75 et 79.

Cette boucle sur k se termine à l'étape 105 par un retour à l'étape 101 pour chaque noeud k non instancié de S et différent de j. Lorsque tous les noeuds k ont été examinés, on passe à l'étape 107 qui termine la seconde boucle par un retour à l'étape 87 pour chaque noeud non instancié j de S. Lorsque tous les noeuds j ont été examinés, c'est à l'étape suivante 109 que s'effectue le retour à l'étape 85 pour chacune des Séquences Partielles S. Dès que la propagation a été réalisée pour toutes les séquences S, l'étape 109 provoque un retour à l'étape 71.

De cette façon, à chaque occurrence d'un nouvel événement i daté t, la propagation de la date courante interne et de l'occurrence de l'événement selon le procédé permet d'éliminer les séquences échouées et complètes qui n'encombrent ainsi plus la mémoire du système, et cela tout en évitant de déclencher de fausses alarmes.

D'autres modifications à la portée de l'homme du métier font également partie de l'esprit de l'invention.

## Revendications

1. Procédé de détection des séquences d'échec dans un système de reconnaissance de situations comportant au moins une situation, composée d'une liste d'événements et de contraintes temporelles liant ces événements, pour laquelle est créée en mémoire une séquence d'événements contenant une liste des événements attendus dans cette situation et des intervalles des dates d'occurrence possibles de chacun de ces événements, lesdits intervalles étant initialement égaux à $]-\infty, +\infty[$, ledit procédé gérant une horloge interne, différente du temps universel, représentant la date courante du système et caractérisé par :
   la mise à jour des séquences d'événements pour chaque situation à chaque occurrence d'un nouvel événement, cette mise à jour provoquant :

   une première étape de mise à jour de la date courante à la date à laquelle le nouvel événement s'est produit,

   une seconde étape de mise à jour, pour chaque séquence d'événements mémorisée, des intervalles des dates d'occurrences possibles des événements non encore enregistrés en fonction des contraintes temporelles et de la nouvelle date courante,

   une troisième étape de détection de toutes les séquences d'événements pour lesquelles un de ces intervalles est vide, ces séquences étant désignées comme séquences d'échec;

   une quatrième étape de création de nouvelles séquences d'événements intégrant ce nouvel événement;

   une cinquième étape de détection des séquences complètes.

2. Procédé selon la revendication 1, caractérisé en ce que la mémoire occupée par une séquence d'événements est libérée si celle-ci est détectée comme étant une Séquence d'Echec.

3. Procédé selon la revendication 1, caractérisé en ce que la mémoire occupée par une séquence d'événements est libérée si celle-ci est détectée comme étant une Séquence Complète.

4. Procédé selon la revendication 1, caractérisé en ce que la création d'une nouvelle séquence d'événements, qui correspond à la reconnaissance d'un événement attendu, provoque l'appel d'une fonction dite de Reconnaissance, associée à la situation correspondant à cette séquence d'événements.

5. Procédé selon la revendication 1, caractérisé en ce que la détection d'une séquence complète provoque l'appel d'une fonction dite Complète, associée à la situation correspondant à cette séquence d'événements.

6. Procédé selon la revendication 1, caractérisé en ce que la détection d'une séquence d'échec provoque l'appel d'une fonction dite d'Echec, associée à la situation correspondant à cette séquence d'événements.

7. Procédé selon la revendication 6, caractérisé en ce que la fonction dite d'Echec n'est appelée que si la séquence d'échec n'est inclue dans aucune autre séquence d'événement.

8. Procédé selon la revendication 1, caractérisé en ce qu'une valeur positive de délai peut être définie pour chaque événement composant une situation, ledit délai exprimant sous forme de durée un retard possible du signalement de l'occurrence de cet événement.

9. Procédé selon la revendication 1, caractérisé en ce qu'une sixième étape de calcul de la date de temps mort, date la plus proche à laquelle au moins une séquence d'événements aura échoué si un événement qu'elle attend ne se produit pas avant cette date, est ajoutée entre la troisième et la quatrième étape.

10. Procédé selon la revendication 9, caractérisé en ce que ladite date, appelée date de temps mort, est calculée comme étant le minimum des bornes supérieures des intervalles des dates d'occurrence possibles des événements attendus par chacune des séquences d'événements.

11. Procédé selon la revendication 9, caractérisé en ce que, à chaque occurrence d'un nouvel événement, tant que la date d'occurrence du nouvel élément est postérieure à la date de temps mort, la première étape est remplacée par une étape de mise à jour de la date courante à la date de temps mort et les deuxième, troisième et sixième étapes sont effectuées;

12. Procédé selon la revendication 1, selon lequel la définition des situations est caractérisée par la génération d'un graphe temporel pour chacune des situations, ce graphe permettant:

la visualisation sur un écran des événements et des contraintes temporelles les liant à l'aide d'objets graphiques et d'arcs, respectivement représentatifs des événements et des contraintes, et portant comme attributs respectifs les noms donnés aux événements qu'ils représentent et les intervalles de contraintes temporelles, et

la vérification de la consistance des chemins formés par les contraintes temporelles entre les différents événements attendus.

**Patentansprüche**

1. Verfahren zur Erfassung von Mißerfolgsequenzen in einem System zur Erkennung von Situationen, die wenigstens eine Situation umfassen, die aus einer Liste von Ereignissen und diese Ereignisse verbindenden zeitlichen Beschränkungen gebildet ist und für die in einem Speicher eine Ereignissequenz erzeugt wird, die eine Liste von in dieser Situation erwarteten Ereignissen und von Intervallen möglicher Auftrittszeitpunkte jedes dieser Ereignisse enthält, wobei die Intervalle anfangs gleich ]-∞, +∞ [ sind, wobei das Verfahren einen internen Takt steuert, der von der universellen Zeit verschieden ist und den momentanen Zeitpunkt des Systems repräsentiert, gekennzeichnet durch:
die Aktualisierung der Ereignissequenzen für jede Situation bei jedem Auftreten eines neuen Ereignisses, wobei diese Aktualisierung bewirkt:

einen ersten Schritt der Aktualisierung des momentanen Zeitpunkts auf den Zeitpunkt, zu dem sich das neue Ereignis ereignet hat,

einen zweiten Schritt des Aktualisierens der Intervalle möglicher Auftrittszeitpunkte von noch nicht aufgezeichneten Ereignissen in Abhängigkeit von den zeitlichen Beschränkungen und des neuen momentanen Zeitpunkts für jede gespeicherte Ereignissequenz,

einen dritten Schritt des Erfassens sämtlicher Ereignissequenzen, für die eines dieser Intervalle leer ist, wobei diese Sequenzen als Mißerfolgsequenzen bezeichnet werden;

einen vierten Schritt des Erzeugens neuer Ereignissequenzen, die dieses neue Ereignis integrieren;

einen fünften Schritt des Erfassens vollständiger Sequenzen.

2. Verfahren nach Anspruch 1, dadurch gekennzeichnet, daß der von einer Ereignissequenz belegte Speicher freigegeben wird, wenn diese als Mißerfolgsequenz erkannt wird.

3. Verfahren nach Anspruch 1, dadurch gekennzeichnet, daß der von einer Ereignissequenz belegte Speicher freigegeben wird, wenn diese als vollständige Sequenz erkannt wird.

4. Verfahren nach Anspruch 1, dadurch kennzeichnet, daß die Erzeugung einer neuen Ereignissequenz, die der Erkennung eines erwarteten Ereignisses entspricht, den Aufruf einer sogenannten Erkennungsfunktion bewirkt, die der dieser Ereignissequenz entsprechenden Situation zugeordnet ist.

5. Verfahren nach Anspruch 1, dadurch gekennzeichnet, daß die Erfassung einer vollständigen Sequenz den Aufruf einer sogenannten vollständigen Funktion bewirkt, die der dieser Ereignissequenz entsprechenden Situation zugeordnet ist.

6. Verfahren nach Anspruch 1, dadurch gekennzeichnet, daß die Erfassung einer Mißerfolgsequenz den Aufruf einer sogenannten Mißerfolgfunktion bewirkt, die der dieser Ereignissequenz entsprechenden Situation zugeordnet ist.

7. Verfahren nach Anspruch 6, dadurch gekennzeichnet, das die Mißerfolgfunktion aufgerufen wird, wenn die Mißerfolgsequenz in keiner anderen Ereignissequenz enthalten ist.

8. Verfahren nach Anspruch 1, dadurch gekennzeichnet, daß ein positiver Verzögerungswert für jedes eine Situation aufbauende Ereignis definiert werden kann, wobei die Verzögerung in Form einer Zeitdauer eine mögliche Verzögerung der Meldung des Auftretens dieses Ereignisses angibt.

9. Verfahren nach Anspruch 1, dadurch gekennzeichnet, daß zwischen den dritten Schritt und den vierten Schritt ein sechster Schritt eingefügt ist, in dem der Leerlaufzeit-Zeitpunkt berechnet wird, der sich am nächsten bei dem Zeitpunkt befindet, zu dem wenigstens eine Ereignissequenz abbricht, falls sich ein Ereignis, das sie erwartet, nicht vor diesem Zeitpunkt ereignet.

10. Verfahren nach Anspruch 9, dadurch gekennzeichnet, daß der Zeitpunkt, der Leerlaufzeit genannt wird, als Minimum der oberen Grenzen der Intervalle möglicher Auftrittszeitpunkte von von jeder der Ereignissequenzen erwarteten Ereignissen berechnet wird.

11. Verfahren nach Anspruch 9, dadurch gekennzeichnet, daß bei jedem Auftreten eines neuen Ereignisses, solange der Auftrittszeitpunkt des neuen Elements nach dem Leerlaufzeit-Zeitpunkt liegt, der erste Schritt durch einen Schritt des Aktualisierens des momentanen Zeitpunkts auf den Leerlaufzeit-Zeitpunkt ersetzt wird, und die zweiten, dritten, und sechsten Schritte ausgeführt werden.

12. Verfahren nach Anspruch 1, bei dem die Definition der Situationen durch die Erzeugung eines zeitlichen Graphen für jede der Situationen gekennzeichnet ist, wobei dieser Graph ermöglicht:

auf einem Bildschirm Ereignisse und sie verbindende zeitliche Beschränkungen mit Hilfe von graphischen Objekten und Bögen anzuzeigen, die die Ereignisse bzw. die Beschränkungen repräsentieren und als jeweilige Attribute die Namen tragen, die den Ereignissen, die sie interpretieren, und den Intervallen zeitlicher Beschränkungen, verliehen worden sind, und

die Konsistenz der durch die zeitlichen Beschränkungen gebildeten Wege zwischen den verschiedenen erwarteten Ereignissen zu verifizieren.

## Claims

1. Method for detecting failure sequences in a situation-recognition system comprising at least one situation, composed of a list of events and time constraints linking these events, for which a sequence of events is created in memory, said sequence containing a list of events expected in this situation and intervals of the possible dates of occurrence of each of these events, said intervals being initially equal to ]-∞, +∞[, said method managing an internal clock, different from universal time, representing the current date of the system and characterised by:

the updating of the sequences of events for each situation each time a new event occurs, this update causing:

a first step of updating the current date to the date when the new event occurred,

a second step of updating, for each stored sequence of events, the intervals of the possible dates of occurrence of the events not yet recorded as a function of the time constraints and of the new current date,

a third step of detecting all the sequences of events for which one of these intervals is empty, these sequences being denoted as failure sequences;

a fourth step of creating new sequences of events incorporating this new event;

a fifth step of detecting complete sequences.

2. Method according to Claim 1, characterised in that the memory occupied by a sequence of events is released if said sequence is detected as being a Failure Sequence.

3. Method according to Claim 1, characterised in that the memory occupied by a sequence of events is released if said sequence is detected as being a Complete Sequence.

4. Method according to Claim 1, characterised in that the creation of a new sequence of events, which corresponds to the recognition of an expected event, causes the calling up of a function known as Recognition, associated with the situation corresponding to this sequence of events.

5. Method according to Claim 1, characterised in that the detection of a complete sequence causes the calling up of a function known as Complete, associated with the situation corresponding to this sequence of events.

6. Method according to Claim 1, characterised in that the detection of a failure sequence causes the calling up of a function known as Failure, associated with the situation corresponding to this sequence of events.

7. Method according to Claim 6, characterised in that the function known as Failure is only called up if the failure sequence is not included in any other sequence of events.

8. Method according to Claim 1, characterised in that a positive value for a period can be defined for each event composing a situation, said period expressing, in the form of duration, a possible delay in signalling the occurrence of this event.

9. Method according to Claim 1, characterised in that a sixth step of calculating the deadtime date, the closest date when at least one sequence of events has failed if an event that it is awaiting does not take place before that date, is added between the third and fourth step.

10. Method according to Claim 9, characterised in that said date, known as deadtime date, is calculated as being the minimum of the upper limits of the intervals of the possible dates of occurrence of the events expected by each of the sequences of events.

11. Method according to Claim 9, characterised in that, each time a new event occurs, as long as the date of occurrence of the new element is later than the deadtime date, the first step is replaced by a step of updating the current date to the deadtime date and the second, third and sixth steps are performed.

12. Method according to Claim 1, according to which the definition of the situations is characterised by the generation of a time graph for each of the situations, this graph making it possible:

to display on a screen the events and time constraints linking them by using graphical objects and arcs, representing events and constraints respectively, and carrying as respective attributes the names given to the events that they represent and the time constraint intervals, and

to verify the consistency of the paths formed by the time constraints between the various expected events.

e2

[0,15]

e1

[0,15]

e3

## Fig. 1a

e1     e2     e3     e1          e2

t

0     5     10     15     20     25     30     35

## Fig.2

**Situation** : vérifierHausseTemp

**Evènements** e1 : *HausseTempMargelle : rang = *1

*HausseTempMargelle : génératrice = *2

= *HausseTempMargelle : / début


e2 : *HausseTempStave : rang = *1

*HausseTempStave : génératrice = *2

= *HausseTempStave : / début


e3 : *HausseTempRéfractaire : rang = *1

*HausseTempRéfractaire : génératrice = *2

= *HausseTempRéfractaire : / début


**Contraintes**

c1 $0 \text{ mm} <= e2 - e1 <= 15 \text{ mm}$

c2 $0 \text{ mm} <= e3 - e1 <= 15 \text{ mm}$


WhenAborted printf("Echec %\n" , KNameOf (*HausseTempMargelle))
WhenRecognized printf ("Succéés attente%\n" , KNameOf (*HausseTempMargelle))

.

# Fig. 1b

Début;  i(t) —31

propagation de la
date Ⓐ —33

début boucle sur les
séquences S —35

37

t∈D(i,S)
et
d(i,S) non défini

non

oui

Dupliquer S dans S'
intégrer i(t) dans S' —39

41

∃j(d(j) non défini
et I(j–i)⩽[0,∞[?

non

oui

i attendu
S non maximale
S' maximale —45

j en retard
S' non maximale —43

∀ S''⩽ S'
S'' non maximale —47

49

autre événement
attendu pour S'

non

oui

∀j≠i non instanciés de S'
D(j,S')←D(j,S')∩(D(i,S')+I(i–j))

S' complété
libérer espace
mémoire —55

propagation réduction
des contraintes —51

Appel de
fonction compléte —57

evaluation
deadtime —53

min$_j$(borne.sup(D(j,S')),deadtime)

59

autre S?

oui

non

Fin —61

Fig.3a

Ⓐ

date courante <t? ⟶71

non → | Fin | ⟶73

deadtime antérieur à t? ⟶75

non → mise à jour de la date courante à t ⟶77

oui → saut temporel à deadtime+1 ⟶79

initialiser deadtime à+∞ ⟶81

début boucle 1 sur les séquences partielles S ⟶83

début boucle 2 sur les noeuds j non instanciés de S ⟶85

réduction des intervalles des dates d'occurrence possibles D(j,S) ⟶87     $D(j,S) \rightarrow D(j,S) \times ([\text{date courante},+\infty[ -\Delta(j))$

intervalle D(j,S) vide? ⟶89     oui → Detruire S Ⓑ ⟶91

non

intervalle D(j,S) modifié ⟶93     non →

début boucle 3,noeuds k≠j,non instanciés de S ⟶99

propagation réduction intervalles des dates d'occurrence D(k,S) ⟶101

calcul de deadtime ⟶103

autre k     fin boucle 3 ⟶105

autre j     fin boucle 2 ⟶107

autre S     fin boucle 1 ⟶109

Fig.3b

Ⓑ

111

S Maximale ?          oui

non

Séquence d'Echec
Appel fonction d'Echec          113

Libérer espace
mémoire          115

Fin
Retour          117

Fig.3c